(19) Europäisches Patentamt
European Patent Office
Office européen des brevets

(11) Publication number: **0 146 298 B1**

(12) # EUROPEAN PATENT SPECIFICATION

(45) Date of publication of patent specification: **15.05.91**

(51) Int. Cl.5: **B01D 61/00**, B01D 63/00, C10G 73/04

(21) Application number: **84308368.4**

(22) Date of filing: **03.12.84**

(54) **Method and apparatus for separating filter aid from separated wax by selective permeation through a membrane.**

(30) Priority: **01.12.83 US 557109**
**30.10.84 US 666385**

(43) Date of publication of application:
**26.06.85 Bulletin 85/26**

(45) Publication of the grant of the patent:
**15.05.91 Bulletin 91/20**

(84) Designated Contracting States:
**DE FR GB IT**

(56) References cited:
EP-A- 0 013 834
EP-A- 0 125 907
FR-E- 2 005 334
US-A- 4 464 494
EP-A- 0 088 459
DE-A- 2 527 231
US-A- 4 192 732

(73) Proprietor: **EXXON RESEARCH AND ENGINEERING COMPANY**
**P.O.Box 390, 180 Park Avenue**
**Florham Park, New Jersey 07932(US)**

(72) Inventor: **Thompson, John Arthur**
**581 Zone Street**
**Wyoming Ontario N0N 1T0(CA)**

(74) Representative: **Somers, Harold Arnold et al**
**ESSO Engineering (Europe) Ltd. Patents & Licences Mailpoint 72 Esso House Ermyn Way**
**Leatherhead, Surrey KT22 8XE(GB)**

EP 0 146 298 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Dewaxing aids used to improve the morphology and hence filterability of waxes crystallized out of waxy hydrocarbon oils by the practice of dewaxing processes (especially solvent dewaxing processes) are recovered from the wax by means of an ultrafiltration process employing a membrane under specific and controlled conditions of temperature, pressure and flow. The membrane is preferably utilized in the form of a spiral wound element which preferably employs in its construction feed and retentate spacers made of a polyester material, selected from PE-25, PE-18 and Nylon 20, preferably PE-25. The use of this spacer improves the mixing and reduces the pressure drop in the element. Feed spacer materials and their mode of use are described in greater detail below. The membrane material is selected from polysulfone, nylon and cellulose acetate, preferably polysulfone.

The practice of the present invention utilizes a polysulfone, nylon or cellulose acetate membrane, preferably polysulfone, under specific conditions of temperature, pressure, and flow and preferably in the form of a spiral wound element preferably employing the PE-25 as the feed spacer. The dewaxing aid can be removed from the solvent free wax by permeation of the wax through the membrane at high flux and rejection of the dewaxing aid (i.e., with a very low concentration of entrained dewaxing aid in the permeated wax). This concentrated dewaxing aid in the retentate is suitable for recycle to the dewaxing process.

### Background

Waxy hydrocarbon oils can be dewaxed with or without the use of any dewaxing solvent, depending on the viscosity of the waxy hydrocarbon oil being dewaxed. Certain oils, such as high boiling distillates and deasphalted oils require the use of dilution dewaxing solvents to facilitate handling, especially under reduced temperature conditions. When a dewaxing solvent is employed any of the well known solvents are suitable. For example, there may be used at least one member selected from alkane, alkene or alkyne hydrocarbons having 2 to 10 carbon atoms in the molecule, such as ethane, propane, butane, pentane, hexane and octane or mixtures thereof. Some of these hydrocarbons can also be employed as autorefrigerative solvents e.g., propane and propylene. Ketones containing from 3 to 6 carbons, such as acetone, dimethyl ketone, methyl ethyl ketone, methyl propyl ketone and methyl isobutyl ketone and mixtures thereof may also be used. Mixtures of the ketones with at least one member selected from aromatic hydrocarbons such as benzene and toluene, e.g. methyl ethyl ketone/toluene or methyl isobutyl ketone/toluene are also suitable. Halogenated hydrocarbons such as methyl chloride, methylene chloride and ethylene dichloride can also be used. Further, N-methylpyrrolidone and N-ethylpyrrolidone may be used as dewaxing solvents. Useful solvent combinations include mixtures of autorefrigerative and ketone solvents, such as mixtures of acetone and propylene.

Any waxy hydrocarbon oil stock, petroleum oil stock or distillate fraction thereof may be dewaxed employing dewaxing aids. Illustrative but nonlimiting examples of such stocks are (a) distillate fractions that have a boiling range within the broad range of from about 500 to 1300°F (260 to 704.4°C), (b) bright stocks or deasphalted oils having an initial boiling point above about 800°F (426.7°C). Preferably, the oils are the lubricating oil fraction or transformer oil fraction. Additionally, any of these feeds may be hydrocracked prior to distilling, or deasphalting. These may come from any source such as paraffinic crudes obtained from Aramco, Kuwait, Panhandle, North Louisiana, etc., naphthenic crudes, such as Tia Juana, Coastal crudes, etc., as well as the relatively heavy feedstocks such as bright stocks having a boiling range of 1050+°F(565.6+°C) and synthetic feedstocks derived from Athabasca tar sands, coal, shale oil, etc.

Well-known dewaxing aids are condensation polymers of chlorinated paraffins and naphthalenes, polyalkylacrylates, polyalkylmethacrylates, alphaolefin copolymers, ethylene-vinyl acetate copolymers, alkyl fumarate-vinyl acetate copolymers, polyethylene-oxides, polyvinyl-pyrrolidones, polyisobutylenes, polybutadienes, polystyrene-butadiene copolymers, alkali metal stearates, polyalkylene glycols, fatty acid glycerides, etc. These dewaxing aids may be used either alone or in mixtures of two or more dewaxing aids, typical examples of such mixtures being polyalkylmethacrylates and chlorinated paraffin/naphthalene condensation polymers; or polyalkylmethacrylates and ethylene-vinylacetate copolymers, etc., mixed in various proportions. In order for these dewaxing aids to be efficient in that their use reduces the amount of fine particles produced and, thereby, the wax separation (filtration) rate is increased, they should be of relatively high molecular weight and possess a broad distribution of molecular weight. Dewaxing aids having molecular weights from 1,000 to approaching or exceeding 5,000,000, preferably 2,000 to about 1,000,000, more preferably about 10,000 to 500,000, have been successfully employed. These dewaxing aids are typically employed in an amount of active ingredient ranging from about 500 to 50,000 ppm aid on the waxy

oil, preferably 500 to 20,000 ppm, more preferably 1,000 to 20,000 ppm.

Solvent dewaxing processes include indirect heat exchange in a scraped-surface chiller or other heat transfer equipment wherein waxy oil, solvent and dewaxing aid at approximately the same elevated temperature are mixed in such a manner so as to effect complete and thorough solution of the oil in the solvent before being cooled or chilled. This solution is then cooled at a uniform, slow rate under conditions which avoid intense agitation of the solution as the wax precipitates out. The wax is separated from the oil by some suitable separation technique such as filtration, centrifugation etc.

Another well-known method of solvent dewaxing involves incremental solvent addition. In this method, solvent either alone or containing the desired amount of dewaxing aid is added to the oil at several points along a chilling apparatus. Alternately, the dewaxing aid may be added to the hot waxy oil with or without solvent present. The mixture is then chilled by indirect heat exchange, causing wax crystallization to occur and the mixture thickens considerably. A first increment of solvent is introduced at this point in order to maintain fluidity, cooling continues and more wax is precipitated. A second increment of solvent is added to maintain fluidity. This process is repeated until the desired oil-wax filtration temperature is reached, at which point an additional amount of solvent is added in order to reduce the viscosity of the mixture to that desired for the filtration step. In this method the temperature of the incrementally added solvent should also be about the same as that of the wax/oil/solvent mixture. If the solvent is introduced at a lower temperature, shock chilling of the slurry occurs resulting in the formation of small and/or acicula shaped wax crystals with attendant poor filter rate.

Yet another solvent dewaxing method is the DILCHILL[R] (a registered service mark of Exxon Research and Engineering Company) dewaxing process, illustrated in US-A-3,773,650 and US-A-3,775,288, the disclosures incorporated herein by reference. A waxy oil, at a temperature above its cloud point, with or without dewaxing aid mixed therein, is introduced into the top of an elongated, staged cooling zone and cold dewaxing solvent with or without dewaxing aid is incrementally introduced into said zone along a plurablity of stages therein while maintaining a high degree of agitation in said stages of said zone so as to achieve substantially instantaneous mixing of the solvent and wax/oil mixture as they progress through said zone. The chilling rate in the mixing zone takes place at an average of about 2°F (1.1°C) minute to form a slurry comprising solid particles of wax and a dewaxed oil solution. The slurry exits the mixing zone at some elevated temperature and is then passed optionally through a scraped surface chiller (US-A-3,775,288) wherein it is further cooled down to the desired temperature for wax filtration. From there, the slurry is passed to a rotary drum wax filter to separate the solid particles of wax from the dewaxed oil solution. The use of dewaxing aids in such a system is contemplated.

In typical solvent dewaxing processes (including both autorefrigerative solvent systems and normally liquid solvent systems) the dewaxing aid employed is left in the wax and is not recovered for recycle. This is so because the standard recovery techniques, e.g., distillation, are either uneconomical and/or detrimental to the components employed. High temperatures degrade the dewaxing aid rendering them unsuitable for recycle and re-use.

Failure to recover and recycle dewaxing aid, beyond involving the loss of such material and the expense of the continual addition of new aid, alters the nature and purity of the wax product by being present in the wax and can impart color or other objectionable character to the wax product.

Any dewaxing process employing dewaxing aids may be improved by utilization of the membrane (preferably polysulfone membrane) separation process of the present invention. Dewaxing processes most commonly practiced are those utilizing dewaxing solvents.

## Description of The Figures

Figure I presents the effect of polymer glass transition temperature on flux decline.

Figure II presents the effect of pressure on flux.

Figure III presents the effect of pressure on membrane compaction and accompanying flux decline.

Figure IV presents the effect on the relation between pressure and flow exerted by the choice of Vexar substitutes.

Figure V presents the effect on the relation between pressure and flow exerted by the choice of element feed and permeate cloths.

Figure VI presents a preferred embodiment of the present process.

## The Present Invention

By the practice of the instant invention, the dewaxing aid, rather than being discarded by being left in

the wax is recovered by passing the wax stream through a polysulfone membrane spiral wound element separation unit such that the wax passes through the membrane to form a permeate while the dewaxing aid is retained in the retentate. The recovered dewaxing aid is recycled to the dewaxing process and is as effective as fresh dewaxing aid in improving the performance of the dewaxing process, while the now purified wax can be sent either to storage or for further processing.

The dewaxing aid recovery process utilizing polysulfone membrane is conducted at a temperature of about 70 to 150 °C, preferably 70-100 °C. Elevated temperatures are required to melt the wax/dewaxing aid into liquid wax and dewaxing aid. Elevated temperatures are required to insure that wax is in the liquid state. Solid wax crystals will not permeate through the membrane. Solid wax crystals are undesirable since such crystals will contain in them the dewaxing aid. Only by reducing the wax to the liquid state will the wax and dewaxing aid be separable by permeating the small liquid wax molecules through the membrane while the macromolecular dewaxing aid molecules are retained.

The polysulfone membrane material used in the dewaxing aid recovery process is about 3 to 15 mils (76.2 to 381 µm) thick, preferably about 5 to 7 mils (127 to 177 µm) thick and has an average pore diameter of about 500 to 2000Å (50 to 200 nm). Membrane made of polysulfone is the membrane of choice in the present invention since it gives the desired level of flux and selectivity, see Table I.

The polysulfone membrane is formulated from polysulfone polymer which is resistant to deformation and deterioration at high temperatures. The polysulfone polymer used in making the membrane should therefore have a glass transition temperature (Tg) of about 140 °C and higher, preferably about 190 °C and higher. A particularly preferred polysulfone is polyethersulfone which has a Tg of greater than 190 °C. Membranes prepared from a polysulfone polymer having high glass transition temperatures demonstrate a high degree of resistance to flux decline over the course of their use in the dewaxing aid recovery process. Table II and Figure I show that flux decline is reduced using membranes made of polysulfone of higher Tg.

## Table I

### MEMBRANE SELECTION

This Table shows that within a range of membrane pore size, selectivity for wax can be attained and that proper choice of membrane material is essential for the operability of the process.

Feed: 600N + 5 wt% dewaxing aid (a 50/50 mixture of Acryloid 150 and Paraflow 149) (DWA used on 34% active ingredient basis)

| Membrane | Pore size μm | Flux (1) 1/m2 . d | % Aid in Permeate, % | Comments |
|---|---|---|---|---|
| Regenerated Cellulose | 0.01 μm | 30 | <0.1 | Low flux due to small pore size membrane |
| Polycarbonate | 0.2 | 125 | <0.1 | Low flux due to a non asymmetric membrane |
| Cellulose Acetate | 0.1 | 280 | <0.1 | Effective membrane |
| Nylon | 0.1 | 220 | <0.1 | Effective membrane |
| Polysulfone | 0.1 | 300 | <0.1 | Membrane of Choice |
| Tranne ME | 0.45 | 230 | 2.4 | Pore selectivity for dewaxing due to large pore size |
| Polypropylene | 0.2 | melted | | melted |

(1) Operating conditions, 150°C at 20 GPH (75.71 1/hour) flow rate and 100 psig (689.5 kPa gauge) pressure.

## Table II

### Effect of Membrane Tg on Flux Decline

Feed: 600N Slack Wax plus 0.2% Dewaxing Aid (50/50 Acryloid 150/Paraflow 149)

Operating Conditions: 100°C, 50 psig (344.8 kPa gauge), 2 gpm (7.57 liter/minute) flow rate all permeates had <0.02% aid

| Membrane | Glass Transition Temp (Tg), °C | Flux Decline Rate, (1/m² · d/hour) |
|---|---|---|
| Polysulfone | 140 | $3.5 \times 10^{-2}$ |
| Polysulfone | 190 | $1.9 \times 10^{-2}$ |
| Polyethersulfone | >190(220*) | $0.4 \times 10^{-2}$ |

*Chemical Engineering Science, Vol. 38, No. 1, 1983

Table III lists the characteristics of a few typical waxes.

## Table III

### SYSTEM CHARACTERISTICS

| Slack Wax Grade | 600N | 600N +5% DWA | B.S.(1) | B.S. +5% DWA |
|---|---|---|---|---|
| Viscosity at 100°C, cSt ($m^2/s$) | 8.8 ($8.8 \times 10^{-6}$) | 27 ($27 \times 10^{-6}$) | 15 ($15 \times 10^{-6}$) | 50 ($50 \times 10^{-6}$) |
| Molecular Weight (wax) | 500 | - | 700 | - |
| Wax Melting Point, °C | 65 | - | 91 | - |
| Oil in Wax, wt% | 5-40 | | 5-30 | |

(1) B.S. Bright Stock (2500N)

DWA = 1:1 Paraflow 149/Acryloid 150 (used on an as received basis which contains about 35-40 wt.% active ingredient).

The membranes which have proven useful in the process of the present invention are available from various commercial sources. Polysulfone and polyethersulfone membranes were secured from Desalination Systems Incorporated. The Nylon membranes from Pall Canada, Ltd. (the Ultipore series) and the cellulose acetate membranes from Schleicher and Schuell.

The polysulfone membranes of choice are prepared from polysulfone polymers. Such a polymer is made of the repeating unit:

$$-(C_6H_4C(CH_3)_2C_6H_4O\ C_6H_4SO_2C_6H_4O)_{(50\text{-}80)}$$

and is special in that the phenylene units are linked by three different chemical groups, isopropylidene, ether and sulfone.

The polyether sulfone polymer used to produce the polyethersulfone membrane (having a Tg of greater than 190° C) is made of the repeating unit:

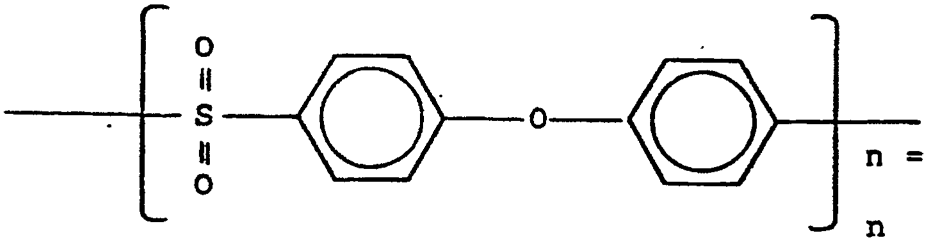

n = 50 - 80

Elevated temperatures are needed to melt the wax into the liquid form, but too high a temperature is to be avoided to insure that the membrane does not experience polymer creep which would result in a loss of flux.

Process operating (gauge) pressure is about 50 psig (344.8 kPa). Although low pressures give relatively

low flux, increasing operating pressure does not necessarily produce a commensurate, equivalent increase in flux. Excessively high pressure can actually result in a decrease in flux, possibly due to membrane compaction. Therefore, operation of the present process at an operating (gauge) pressure of about 50 psig (344.8 kPa) or slightly lower is deemed to be critical to obtaining maximum performance from the system. See Figure II.

The relationship between temperature and pressure for a polysulfone membrane is shown in Figure III. As can be seen excessively high temperature, either alone or coupled with high pressure results in serious decline in flux.

When the liquid wax-dewaxing aid mixture is contacted with the polysulfone membrane in a 4" (10.2 cm) diameter element flow rate of about 1 to 3 gpm (3.785 to 11.356 l/minute), preferably about 2 gpm (7.57 l/minute) is used. Expressed in different units, which are independent of element size, a feed flow velocity of about 1-4 cm/sec., preferably about 2 cm/sec., into the element should be used. Flow velocity determines the level of turbulence across the membrane surface. Sufficient turbulence over the membrane is required to minimize concentration polarization and maintain an operable gel layer thickness.

A common phenomenon encountered in ultrafiltration is the production of a layer of gel on the surface of the membrane. This gel comprises a layer of the larger materials making up the feed. This layer has a significant contribution to membrane selectivity, especially when using large pore membranes. However, too thick a gel layer can seriously impede permeate flux. Maintaining turbulent flow across the membrane controls the thickness of this gel layer. Too low a flow rate results in excessively thick gel layer and a rapid decline in flux. Too high a flow rate can strip the gel layer and seriously degrade selectivity. It has been discovered that a flow rate of about 2 gpm (7.57 l/minute) is optimum for achieving maximum flux and high selectivity.

As the velocity of the feed across the membrane surface increases, the flux is increased due to the decrease in gel thickness on the membrane surface. Values above 4 GPM (15.14 liter/minute) can result in very high pressure drops and destruction of the membrane/element package.

**TABLE IV**

**EFFECT OF FEED FLOW RATE ON FLUX**

| Flow Rate, (GPM) liter/minute | Flux, ($l/m^2 \cdot d$) | % aid in Permeate |
|---|---|---|
| (0) 0 | 20 | - |
| (0.5) 1.89 | 163 | <0.02 |
| (1.0) 3.79 | 235 | <0.02 |
| (2.0) 7.57 | 302 | <0.02 |
| (4.0) 15.14 | 235 | <0.02 |

The above table is for Polysulfone membrane at 100°C and 50 psig (344.8 kPa gauge) in a 4" (10.2 cm) diameter, 26" (66.04 cm) long element package, using 600N slack wax feed (see Table III).

As previously stated it is preferred to use the polysulfone membrane in the form of a spiral wound element. Spiral wound elements are described in US-A-3,417,870, US-A-3,173,876, US-A-3,367,504, US-A-3,386,583 and US-A-3,397,790 to name just a few. Spiral wound elements for use in this dewaxing aid recovery process are fabricated from materials which are resistant to elevated temperatures and the solvent action of the wax and dewaxing aid, plus any dewaxing solvent and dewaxed oil which may be present. The spiral wound element therefore employs a central mandril-permeate tube made of metal or resistant plastic such as polycarbonate or nylon and an anti-telescoping device also of metal or resistant plastic such as nylon or polycarbonate. The fabrication of spiral wound elements employs various adhesives and glues so as to seal different membrane edges thereby defining permeate channels and feed-retentate channels. The adhesives used in fabricating the element are high temperature epoxies such as Fuller FPS. The permeate channel is defined by a layer of permeate spacer material typically Simplex, (Dacron with melamine

formaldehyde stiffener).

The choice of feed-retentate spacer is not simple and cannot be based solely on identifying a temperature resistant, chemical resistant material. (See Figure IV). It has been discovered that in fabricating the polysulfone spiral wound element the feed-retentate spacer should be PE-25, nylon 20, or small diameter inert rods or spacers positioned parallel to the direction of feed flow, such rods or spacers having a diameter of about 0.03-0.15 inch (0.762 to 2.286 mm), preferably about 0.1 inch (2.50 mm), preferably PE-25. PE-25 is a polyester material having 25 strands per inch (25.4 mm) in its weave. This material is woven from a polyester monofilament thread of 350 micron (µm) diameter at 23.9 threads per inch (25.4 mm). It has a fabric thickness of 780 microns (780 µm) with 44.75% open area. The material used was manufactured by Tetco, Inc., Elmsford, New York. This material imparts a high level of turbulence in the feed-retentate channel in conjunction with a very low pressure drop in the element. By use of this material maximum advantage can be taken of the ability of the polysulfone membrane (under the specific conditions recited) to produce a very high throughput of wax having a very low content of dewaxing aid.

The overall element, comprising cental mandrel, alternating layers of polysulfone membrane, permeate spacers and feed-retentate spacers, (wherein various edges of polysulfone membrane are glued to define alternating permeate channels and feed-retentate channels) and wherein the membrane-permeate spacer-membrane envelope is communicatively attached to the central mandril permeate tube, and anti-telescoping device is finally overwrapped to give the element structural integrity. Such outer overwrap is typically a layer of epoxy reinforced fiber glass. In producing spiral wound elements, a parameter known as channel heights is of importance. The channel height is the distance between adjacent membranes in a spiral wound elements. This space is normally occupied by a feed spacer (traditionally the Vexar material which is 0.03 to 0.06 inch (0.762 to 1.542 mm) in thickness). However, for high viscosity systems (such as the dewaxing aid system) channel heights of up to 0.125 inch (3.175 mm) may be employed in order to reduce the pressure drop. In preparing spiral wound elements, permeate cloths, e.g., tricot and simplex, have traditionally been used in water systems which have viscosities 1 cst at 25 °C. Hot wax has a viscosity ranging between about 7.5-18 cS (7.5 x $10^{-6}$ to 18 x $10^{-6}$) at the permeating temperature about 70-150 °C, preferably about 70-100 °C. Thus, one would expect to see several times the resistance to flow through the cloth.

Figure V shows that there is not much difference between a standard tricot (213) and one of twice the thickness at typical flux levels (for hot wax) of 300 $l/m^2 \cdot d$. However, at higher flow rates the difference becomes larger. Therefore, in order to compensate for higher viscosities of waxy streams, the leaf length in a spiral wound element was shortened from about 40 inches (101.6 cm) to 20 inches (50.8 cm) and the permeate cloth thickness doubled. Of course, by shortening the leaf length the number of leaves was increased from 4 to between 5 and 8.

Further, it has been discovered that in fabricating spiral wound elements the feed spacer material need not extend the entire length of the feed/retentate channel in the elements. Elements prepared with open feed channels have been found to exhibit superior flux to those elements wherein the feed spacer materials extend the entire length of the element. These open feed channels, however, do require the presence of feed spacer material positioned at the forward edge of the membrane so as to define the beginning of the feed channel, when the membrane permeate spacer and feed spacer layers, described above, are wound into an element. The feed spacer material need be only wide enough to resist movement or displacement along the element length down the feed channel under the pressures and flow velocity employed in using the element. This material can be held in place either by the friction created when the element is wound, or by the use of an adhesive. The spacer material (as recited above) is thick enough to separate the membrane layers and define feed channels.

For example, in a 26 inch (66.04 cm) long element, spacer material only 2 inches (5.08 cm) wide, positioned at the leading edge of the feed channel when the element was wound, was found to be sufficient to keep the membrane layers separated and define feed channels. Feed spacer materials which have a width between about 2-10%, preferably about 5-8%, of the overall element length, defining feed channels and positioned at the feed inlet end of the elements are sufficient to produce elements of superior flux. The feed spacer materials can be the PE-25 or other spacer materials previously described placed in the leading edge of the feed channels, as well as materials such as small diameter inert rods or spacers placed in the feed channels parallel to the direction of feed flow.

In an experiment Bright Stock Slack wax was combined with 0.3 wt.% dewaxing aid (active ingredient) comprising a 1:1 mix of Paraflow 149/Acryloid 144 and used as a test feed. Three different element designs employing polysulfone membrane were evaluated. The test runs were conducted at a temperature of 100 °C at flow rate of 2 GPM (7.57 liter/minute) in a 4 inch (10.2 cm) diameter, 26 inch (66 cm) long element. The tests evaluated elements wherein the feed spacer material extended along the entire length of the element,

where the feed spacer material was a 2 inch, (5.08 cm) strip of material positioned at the feed inlet end of the element (the balance of the feed channel being empty) and where the feed spacer material consisted of spacer rods which were 0.1 inch (2.54 mm) in diameter, spaced at 2 inch (5.08 cm) intervals in the feed channel and running the length of the feed channel. The results are presented below:

TABLE V

| Element Design | Flux $l/m^2.d$ |
|---|---|
| Using PE-25 Spacer | 75 |
| Using 2" (5.08cm) Leading Edge (Tricot) Spacer Only | 121 |
| Using Rods as Spacer | 121 |

Description of an Embodiment of the Invention

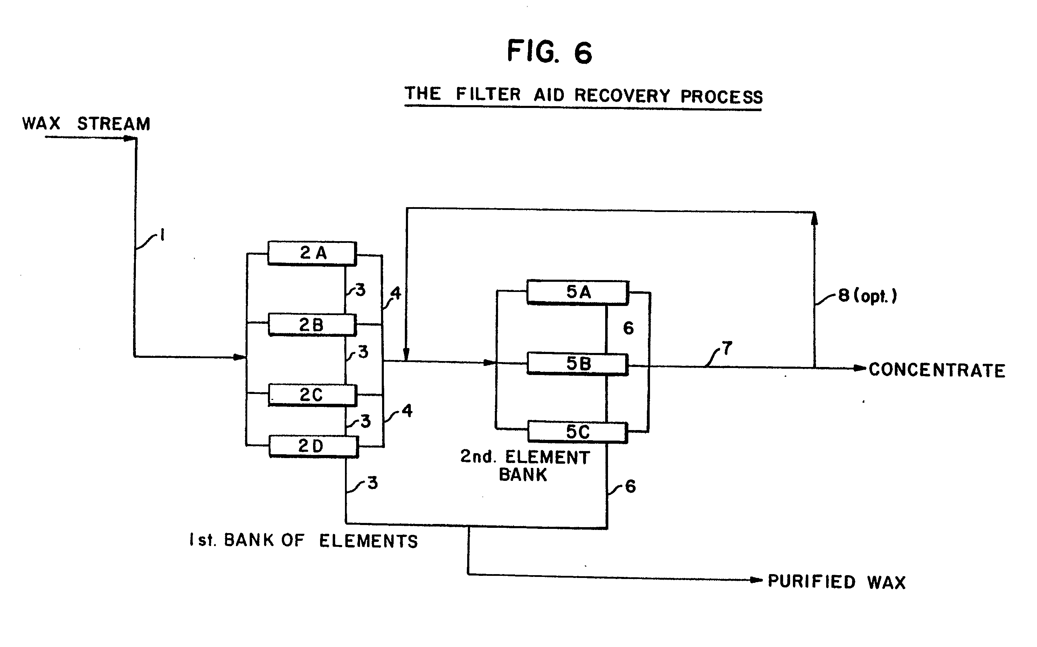

Figure VI is a schematic of an embodiment for the practice of dewaxing aid recovery from slack wax. The various pumps and valves which would typically be employed in a process scheme such as this to maintain adequate pressure as well as any insulation and heat sources to keep the various streams in the liquid form have been omitted from the figure since their placement and operation will be within the capacity of those skilled in the art. Heated slack wax stream from the dewaxing operation (not shown) is fed via line 1 to a bank of polysulfone spiral wound elements (2A-2D) the number of such elements being based on the total volume of slack wax to be ultrafiltered. In this description 4 elements have been arbitrarily selected as exemplative. The first bank separates a major portion of the wax, as permeate from the slack wax/dewaxing aid stream with the wax permeate being collected via line 3 and the residual wax-filter aid retentate being sent for further processing via line 4. This residual retentate stream is fed to a second bank of polysulfone spiral wound elements (5A-5C) wherein additional wax is separated as permeate (line 6) while retentate containing dewaxing aid and a much reduced level of wax is sent via line 6 for recycle to the dewaxing operation. Optionally a portion of this retentate stream can be recirculated to the bank of elements for removal of additional wax. The number of banks of elements and the degree of recycle is left to the discretion and judgment of the practitioner. The purified wax is collected from lines 3 and 6 and combined and sent via line 9 to storage or further processing.

A typical concentration of aid in the slack wax stream is 0.3% which when processed with a membrane unit produces a wax stream being 95% of the original feed stream volume and an aid concentrate stream (of about 10% aid in wax) which is about 5% of the original feed stream volume.

Dewaxing aid was concentrated from a slack wax feed in the laboratory and in a plant test. The results are shown in Table VI.

The laboratory results using a 600N slack wax feed containing aid (Paraflow/Acryloid) gave generally equivalent feed filter rate, to the same system using fresh aid at essentially the same dose: 22.9 $m^3/m^2 \cdot d$ versus 21.2 $m^3/m^2 \cdot d$. This shows that there is essentially no difference between the two. The higher the feed filter rate value the more potent the aid.

The plant results were obtained using 500 gallons (1892.7 liter) of membrane recovered aid, having a concentration of 6.5% aid. This was tested both in the laboratory and in the plant. The plant did not register any change in potency. This was confirmed both using a testing apparatus (at the plant) and in the laboratory.

Table VI

POTENCY OF RECOVERED AID

| Test System | Lab | | Lab | | Plant Test | |
|---|---|---|---|---|---|---|
| Feed to Membrane(1) Unit | None (STD) | 600N + 0.3% Aid | None (STD) | 600N + 0.3% Aid | None (STD) | 600N + 0.3% Aid |
| Concentration of Aid, % | 2.5 (fresh) | 2.5 (recovered) | 6.5 (fresh) | 6.5 (recovered) | 6.5 (fresh) | 6.5 (recovered) |
| Feed Filter Rate m3/m2.d | 21.2 | 22.9 | 22 | 27 | 5.1 Start 3.0 End | 4.2 Avg |
| Relative Feed Filter Rate | 1.0 | 1.08 | 1.0 | 1.22 | 1.0 | 1.0 |
| Potency, Remarks | Equal to Fresh Aid | | Equal or Better Than Fresh Aid | | Plant Systems Did Not Detect Any Change | |

(1) Based on Paraflow 149/Acryloid 150 at 1:1 ratio

In this patent application, the following applies:

| | |
|---|---|
| 1 inch (") | = 2.54 cm |
| 1 mil | = 1 x $10^{-3}$ inch = 2.54 x $10^{-3}$cm |
| 1 Å | = 1 x $10^{-10}$m |
| 1 micron | = 1 x $10^{-4}$cm |
| 1 (US) gallon | = 3.785 liters |

Temperatures in °F are converted to °C by subtracting 32 and then dividing by 1.8.
Pressures in pounds per square inch (psi) are converted to kPa by multiplying by 6.895.
"GPH" stands for (US) gallons per hour.
"GPM" stands for (US) gallons per minute.
Acryloid, Acryloid 144 and Acryloid 150 are each the commercial names of low molecular weight polyalkylmethacrylate polymers made by, and obtainable from, Rohm & Haas.
Paraflow and Paraflow 149 are each the commercial names of wax-naphthalene condensates obtainable from Exxon Chemical Company, (Paramins Division).
PE-15, PE-18 and PE-25 are respectively polyester monofilament weaves of 15, 18 and 25 strands per inch (i.e. per 2.54 cm), and Nylon 20 is a nylon monofilament weave of 20 strands per inch (i.e. per 2.54 cm), all of which weaves are made by Technical Fabricators, 205 Dunn Avenue, Piscataway, New Jersey, USA.
Vexar is a polypropylene or polyethylene mesh, typically having 9 strands per inch (2.54 cm) made by E.I. DuPont de Nemours.
Tricot is a melamine-stiffened cloth made by Gifford Mills.
Simplex is a melamine-stiffened cloth made by Hornwood Mills.
FPS is the designation by the Fuller Company for an adhesive.

## Claims

1. A method for separating dewaxing aid from wax comprising contacting a selectively permeable membrane in spiral wound element form with a hot mixture of wax and dewaxing aid at a temperature of between about 70 to 150°C and at a feed flow velocity through the element of about 1 to 4 cm/sec, and thereby selectively permeating said wax through the spiral wound membrane element yielding a permeate rich in wax and a retentate rich in dewaxing aid, the membrane being selected from polysulfone, nylon and cellulose acetate and spiral wound membrane element employing in its construction feed and retentate spacers made of polyester, nylon or inert material in the form of strips or small diameter rods.

2. The method according to claim 1 wherein the feed- and retentate-spacer material is selected from PE-25 and PE-15 which are polyester monofilament weaves of 25 and 15 strands per 2.54 cm respectively or Nylon 20 which is a nylon (polyamide) monofilament weave of 20 strands per 2.54 cm.

3. The method according to claim 2 wherein the polyester feed-spacer material and the retentate-spacer material are each PE-25 having 23.9 strands per inch (9.4094 strands/cm) in its weave, wherein each strand has a diameter of 350 µm (350 x $10^{-4}$cm), and wherein the material has a fabric thickness of 780 µm (780 x $10^{-4}$cm) with 44.75% open area.

4. The method of any one of claims 1 to 3 wherein the polysulfone polymer making up the membrane has a glass transition temperature of about 140°C and higher.

5. The method of claims 4 wherein the polysulfone polymer making up the membrane has a glass transition temperature of about 190°C and higher.

6. The method of any one of claims 1 to 5 wherein the polysulfone membrane is about 3 to 15 mils 76.2 to 381 µm thick and has an average pore diameter of about 500 to 2,000 Å (500 x $10^{-10}$m to 2000 x $10^{-10}$m).

7. The method of any one of claims 1 to 6 wherein the hot dewaxing aid and wax mixture is contacted with the membrane in the spiral wound membrane element at a temperature of about 70 to 100°C.

8. The method of any one of claims 1 to 7 wherein the hot dewaxing aid and wax mixture is contacted with the spiral wound membrane element at a gauge pressure of about 50 psig (344.75 kPa) or slightly lower.

9. The method of any one of claims 1 to 8 wherein the hot dewaxing aid and wax mixture is passed over the membrane in the spiral wound membrane element at a flow velocity of about 2 cm/sec.

10. A spiral wound element suitable for use in performing the method of any one of claims 1 to 9, comprising a central mandril-permeate tube around which is wrapped layers of membrane, feed spacers and permeate spacers, wherein layers of membrane surround the permeate spacers and are secured around 3 edges to define an envelope which is communicatively attached to the central mandril-permeate tube and a feed spacer is disposed between envelope layers, characterized in that the feed spacer material is positioned at the forward feed inlet edge of the element and is secured in position either by (a) adhesive or (b) friction and does not extend the entire length of the feed channel but is only wide enough to resist movement or displacement along the element down the feed channel under the pressure and flow velocity employed in using the element.

11. The element of claim 10 wherein the width of the feed spacer is from 2 to 10% of the overall element length.

**Revendications**

1. Procédé de séparation d'adjuvant de déparaffinage d'avec de la cire, comprenant la mise en contact d'une membrane sélectivement perméable sous forme d'élément enroulé en spirale avec un mélange chaud de cire et d'adjuvant de déparaffinage, à une température comprise entre environ 70 et 150 °C, et à une vitesse d'écoulement de charge à travers l'élément d'environ 1 à 4 cm/s, et ainsi la perméation sélective de ladite cire à travers l'élément de membrane enroulé en spirale, pour obtenir un perméat riche en cire et un rétentat riche en adjuvant de déparaffinage, la membrane étant choisie parmi la polysulfone, le Nylon et l'acétate de cellulose, et l'élément de membrane enroulé en spirale utilisant dans sa construction des espaceurs de charge et de rétentat constitués de polyester, de Nylon ou d'un matériau inerte sous la forme de bandes ou de tiges de faible diamètre.

2. Procédé selon la revendication 1, dans lequel le matériau espaceur de charge et de rétentat est choisi parmi PE-25 et PE-15 qui sont des tissages monofilaments de polyester de 25 et 15 brins, respectivement, par 2,54 cm, ou le Nylon 20, qui est un tissage monofilament de Nylon (polyamide) de 20 brins par 2,54 cm.

3. Procédé selon la revendication 2, dans lequel le matériau espaceur de charge en polyester et le matériau espaceur de rétentat en polyester sont chacun un PE-25 comportant 23,9 brins par pouce (9,4094 brins/cm) dans son tissage, chaque brin ayant un diamètre de 350 µm ($350 \times 10^{-4}$ cm), et le matériau ayant une épaisseur de tissu de 780 µm ($780 \times 10^{-4}$ cm) avec 44,75 % de jours.

4. Procédé selon l'une quelconque des revendications 1 à 3, dans lequel le polymère polysulfone constituant la membrane a une température de transition vitreuse d'environ 140 °C et plus.

5. Procédé selon la revendication 4, dans lequel le polymère polysulfone constituant la membrane a une température de transition vitreuse d'environ 190 °C et plus.

6. Procédé selon l'une quelconque des revendications 1 à 5, dans lequel la membrane en polysulfone a une épaisseur d'environ 3 à 15 mils (76,2 à 381 µm) et a un diamètre de pore moyen d'environ 500 à 2 000 Å ($500 \times 10^{-10}$ m à $2\,000 \times 10^{-10}$ m).

7. Procédé selon l'une quelconque des revendications 1 à 6, dans lequel l'adjuvant de déparaffinage chaud et le mélange à base de cire sont mis en contact avec la membrane dans l'élément de membrane enroulé en spirale, à une température d'environ 70 à 100 °C.

8. Procédé selon l'une quelconque des revendications 1 à 7, dans lequel l'adjuvant de déparaffinage

chaud et le mélange à base de cire sont mis en contact avec l'élément de membrane enroulé en spirale, sous une pression manométrique d'environ 344,75 kPa (50 psi) ou un peu moins.

9. Procédé selon l'une quelconque des revendications 1 à 8, dans lequel on fait passer l'adjuvant de déparaffinage chaud et le mélange à base de cire sur la membrane dans l'élément de membrane enroulé en spirale, à une vitesse d'écoulement d'environ 2 cm/s.

10. Elément enroulé en spirale approprié à l'utilisation dans la mise en ouvre du procédé selon l'une quelconque des revendications 1 à 9, comprenant un tube à perméat à mandrin central, enveloppé de couches de membrane, des espaceurs de charge et des espaceurs de perméat, dans lequel les couches de membrane entourent les espaceurs de perméat et sont fixées autour de 3 arêtes pour définir une enveloppe qui est liée en communiquant au tube à perméat à mandrin central, et un espaceur de charge est placé entre les couches d'enveloppe, caractérisé en ce que le matériau d'espaceur de charge est placé sur l'arête d'entrée de charge avant de l'élément et est fixé en position soit par (a) un adhésif, soit par (b) frottement et ne s'étend pas sur toute la longueur du canal d'alimentation, mais est seulement suffisamment large pour résister au mouvement ou au déplacement le long de l'élément, en descendant dans le canal de charge, sous la pression et à la vitesse d'écoulement utilisées dans l'utilisation de l'élément.

11. Elément selon la revendication 10, dans lequel la largeur de l'espaceur de charge représente de 2 à 10 % de la longueur totale de l'élément.

**Ansprüche**

1. Verfahren zum Trennen von Entparaffinierungshilfsmittel von Paraffin, bei dem eine selektiv-permeable Membran in Form eines spiralartig gewundenen Elements mit einer heißen Mischung aus Paraffin und Entparaffinierungshilfsmittel bei einer Temperatur zwischen etwa 70 und 150 °C und einer Einsatzmaterialströmungsgeschwindigkeit durch das Element von etwa 1 bis 4 cm/s kontaktiert wird und dadurch das Paraffin selektiv durch das spiralartig gewundene Membranelement dringt, was zu einem paraffinreichen Permeat und einem Entparaffinierungshilfsmittel reichen Retentat führt, wobei die Membran ausgewählt ist aus Polysulfon, Nylon und Cellulose-acetat und die Konstruktion des spiralartig gewundenen Membranelements Zufluß- und Retentatabstandhalter aus Polyester, Nylon oder inertem Material in Form von Streifen oder Stäben mit kleinem Durchmesser aufweist.

2. Verfahren nach Anspruch 1, bei dem das Zufluß- und Retentat-Abstandhaltermaterial ausgewählt ist aus PE-25 und PE-15, die Polyester-Einzelfaser-Gewebe mit 25 bzw. 15 Strängen pro 2,54 cm sind, oder Nylon 20, das ein Nylon (Polyamid)-Einzelfasergewebe mit 20 Strängen pro 2,54 cm ist.

3. Verfahren nach Anspruch 2, bei dem das Polyester-Zufluß-Abstandhaltermaterial und das Retentat-Abstandhaltermaterial jeweils PE-25 mit 9,4094 Strängen/cm (23,9 Stränge pro inch) in ihrem Gewebe sind, wobei jeder Strang einen Durchmesser von 350 µm (350 x $10^{-4}$cm) hat, und wobei das Material eine Gewebedicke von 780 µm (780 x $104^{-4}$cm) mit 44,75 % offener Fläche hat.

4. Verfahren nach einem der Ansprüche 1 bis 3, bei dem das die Membran bildende Polysulfonpolymer eine Glasübergangstemperatur höher hat.

5. Verfahren nach Anspruch 4, bei dem das die Membran bildende Polysulfonpolymer eine Glasübergangstemperatur von etwa 190 °C und höher hat.

6. Verfahren nach einem der Ansprüche 1 bis 5, bei dem die Polysulfonmembran etwa 76,2 - 381 µm (3 bis 15 mils) dick ist und einen durchschnittlichen Porendurchmesser von etwa 500 x $10^{-10}$m bis 2000 x $10^{-10}$m (500 bis 2000Å) hat.

7. Verfahren nach einem der Ansprüche 1 bis 6, bei dem die heiße Entparaffinierungshilfsmittel- und Paraffinmischung mit der Membran in dem spiralartig gewundenen Membranelement bei einer Temperatur von 70 bis 100 °C kontaktiert wird.

**8.** Verfahren nach einem der Ansprüche 1 bis 7, bei dem die heiße Entparaffinierungshilfsmittel- und Paraffinmischung mit dem spiralartig gewundenen Membranelement bei einem Überdruck von etwa 344,75 kPa (50 psig) oder geringfügig niedriger kontaktiert wird.

**9.** Verfahren nach einem der Ansprüche 1 bis 8, bei dem die heiße Entparaffinierungshilfsmittel- und Paraffinmischung mit einer Strömungsgeschwindigkeit von etwa 2 cm/s über die Membran in dem spiralartig gewundenen Membranelement geführt wird.

**10.** Zur Verwendung bei der Durchführung des Verfahrens gemäß einem der Ansprüche 1 bis 9 geeignetes, spiralartig gewundenes Element, das ein zentrales Spindel-Permeatrohr, um das Membranschichten gewickelt sind, Zufluß-Abstandhalter und Permeat-Abstandhalter umfaßt, wobei Membranschichten die Permeat-Abstandhalter umgeben und um drei Kanten herum befestigt sind, um eine Hülle zu definieren, die an dem zentralen Spindel-Permeatrohr kommunizierend befestigt ist, und ein Zuflußabstandhalter zwischen den Hüllenschichten angeordnet ist, dadurch gekennzeichnet, daß das Zufluß-Abstandhaltermaterial am vorderen Zuflußeinlaßrand des Elements angeordnet ist und entweder durch (a) ein Adhäsiv oder (b) Reibung in Position gehalten wird und sich nicht über die gesamte Länge des Zuflußkanals erstreckt, aber nur breit genug ist, einer Bewegung oder Verschiebung entlang dem Element den Zuflußkanal hinunter unter dem/der bei Verwendung des Elements angewendeten Druck/Strömungsgeschwindigkeit zu widerstehen.

**11.** Element nach Anspruch 10, bei dem die Breite des Zufluß-Abstandhalters 2 bis 10 % der gesamten Elementlänge beträgt.

FIG. I

EFFECT OF POLYMER Tg. ON FLUX DECLINE

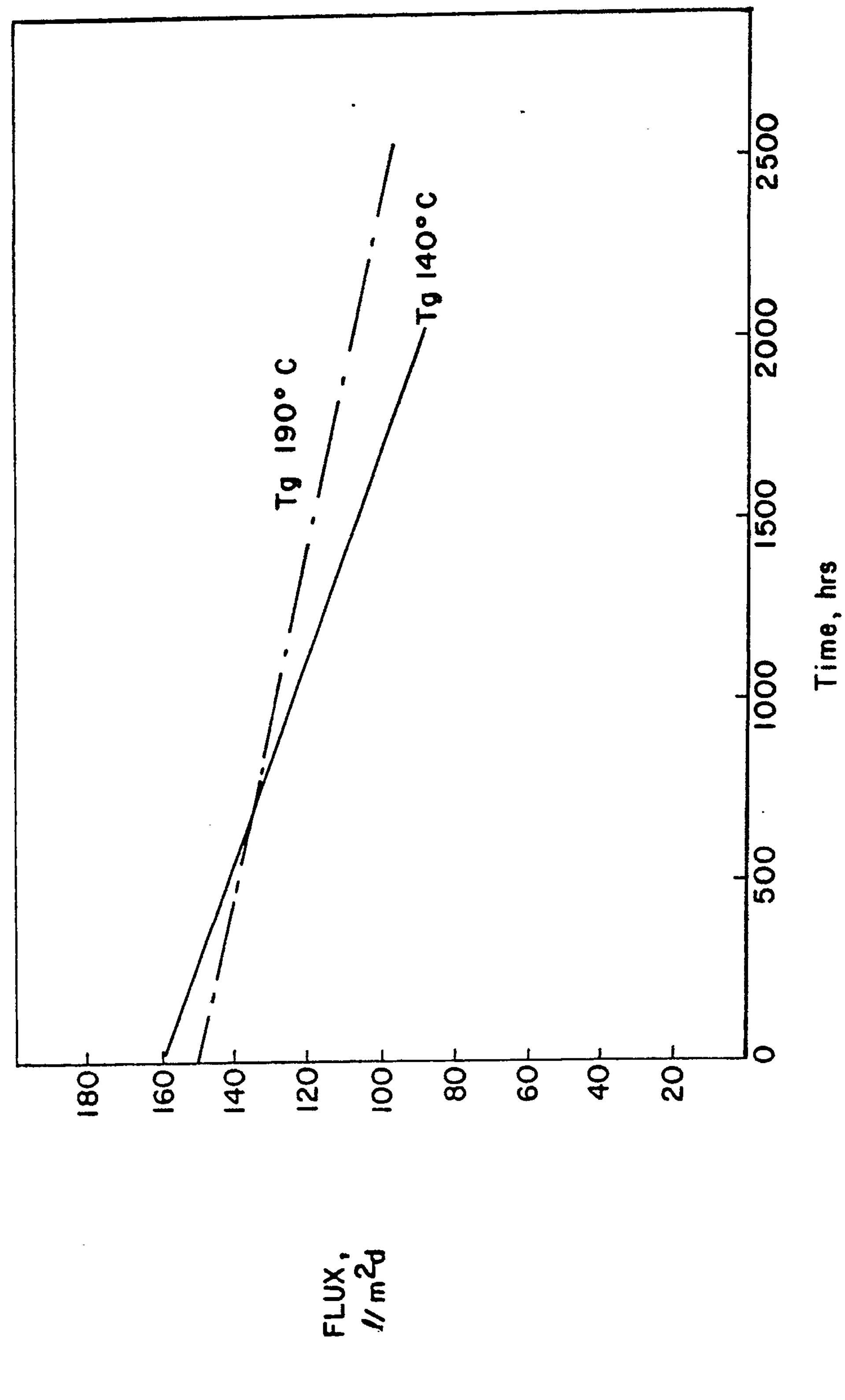

FIG. 2

EFFECT OF PRESSURE ON FLUX

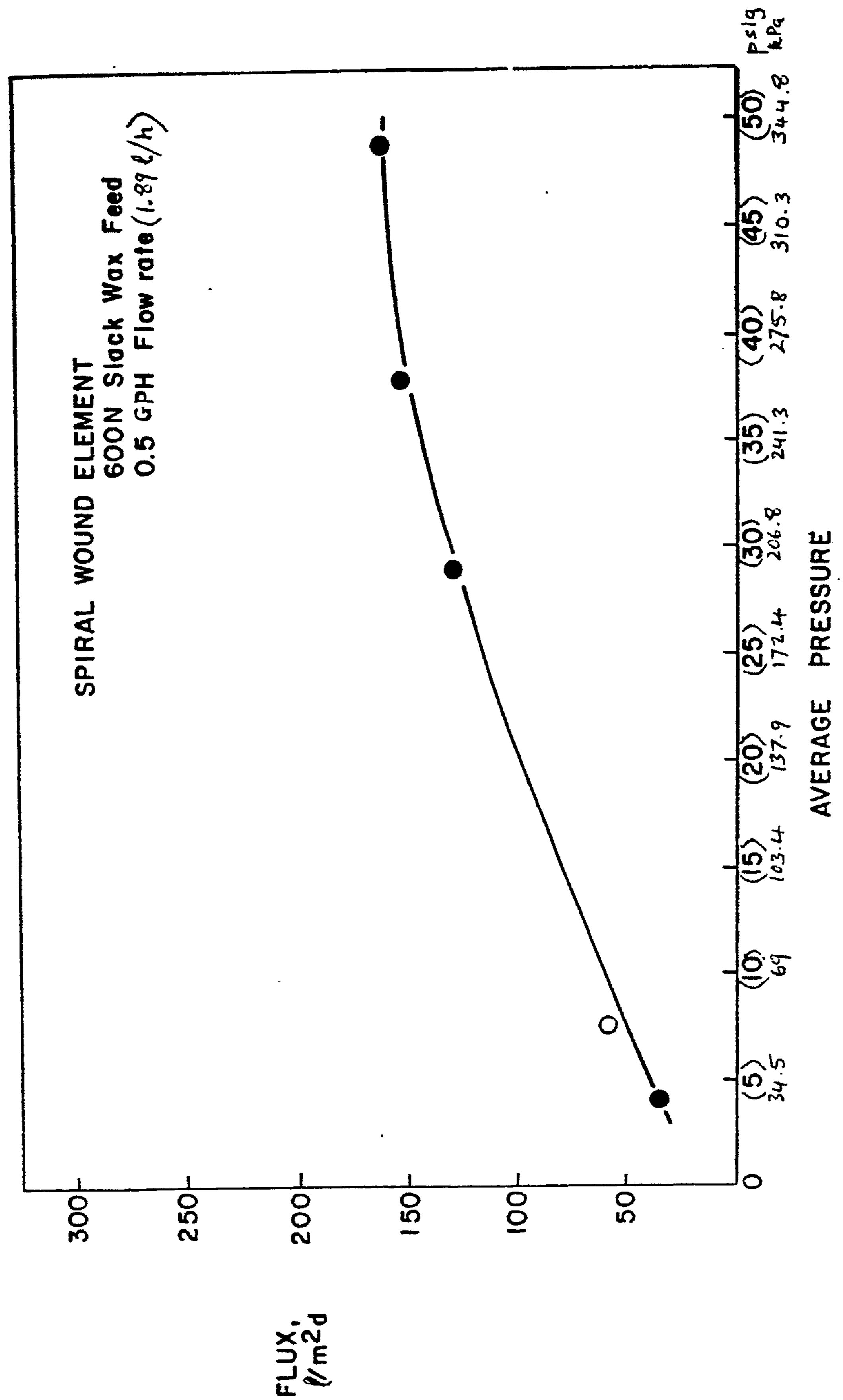

# FIG. 3

MEMBRANE COMPACTION

PLATE & FRAME STUDIES E-500 POLYSULFONE MEMBRANE

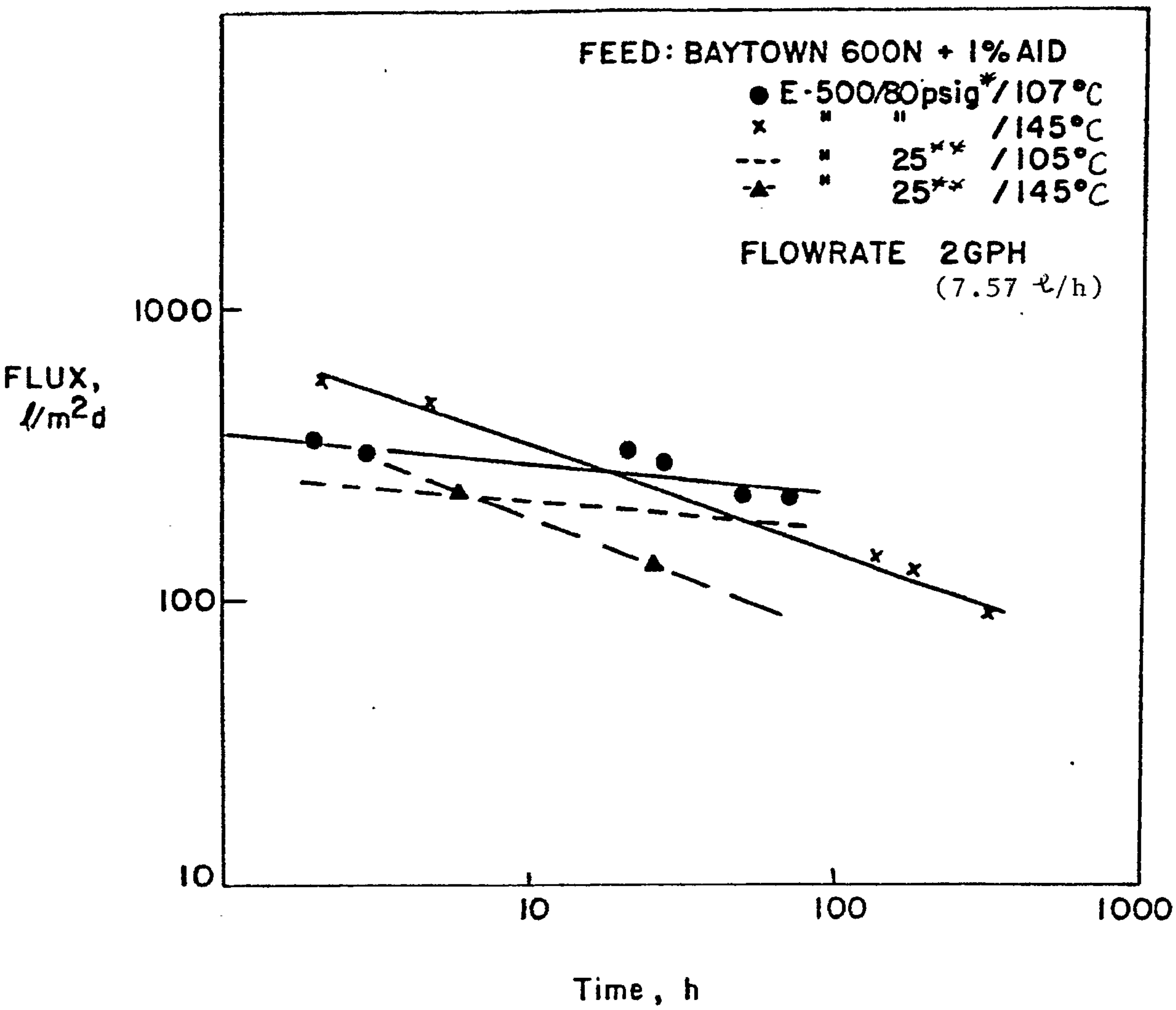


(*Note: 80psig = 551.6 kPa, **25 psig = 172.36 kPa)

FIG. 4

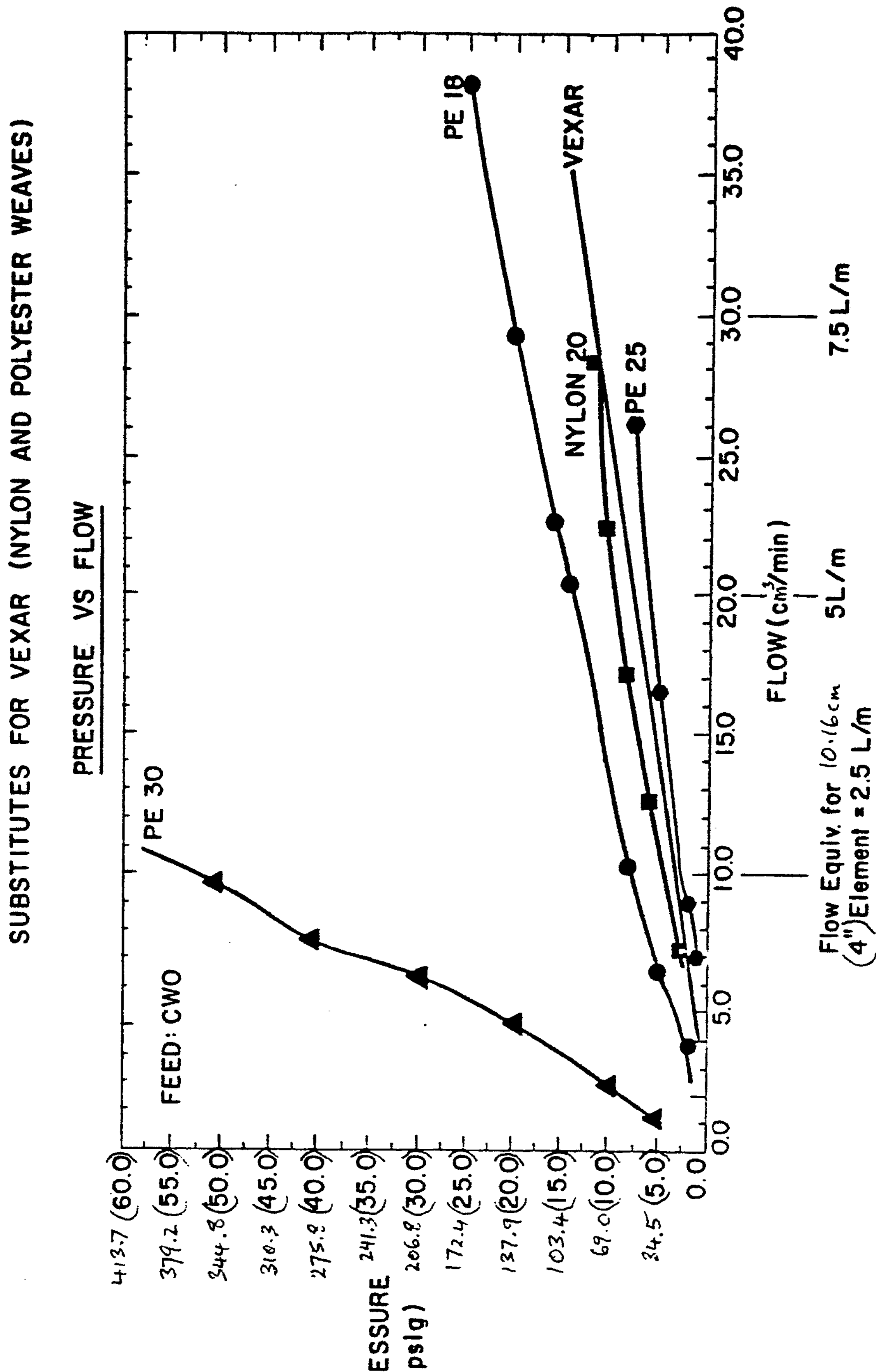
SUBSTITUTES FOR VEXAR (NYLON AND POLYESTER WEAVES)
PRESSURE VS FLOW
FEED: CWO
PE 30
PE 18
VEXAR
NYLON 20
PE 25
PRESSURE
kPa (psig)
413.7 (60.0)
379.2 (55.0)
344.8 (50.0)
310.3 (45.0)
275.9 (40.0)
241.3 (35.0)
206.8 (30.0)
172.4 (25.0)
137.9 (20.0)
103.4 (15.0)
69.0 (10.0)
34.5 (5.0)
0.0
0.0
5.0
10.0
15.0
20.0
25.0
30.0
35.0
40.0
FLOW (cm³/min)
Flow Equiv. for 10.16cm (4")Element = 2.5 L/m
5L/m
7.5L/m

FIG. 5

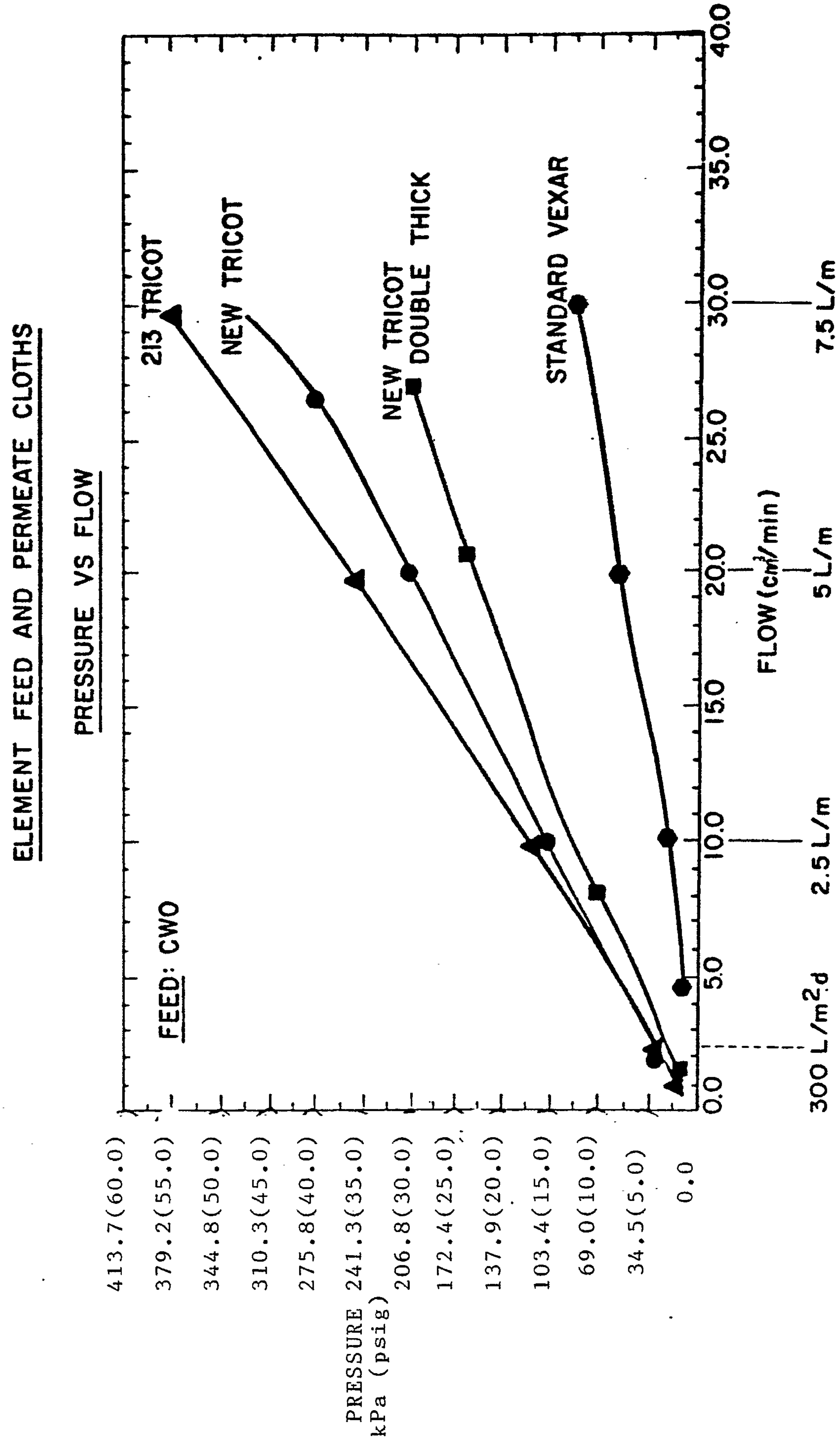
ELEMENT FEED AND PERMEATE CLOTHS
PRESSURE VS FLOW
FEED: CWO
213 TRICOT
NEW TRICOT
NEW TRICOT DOUBLE THICK
STANDARD VEXAR
0.0
5.0
10.0
15.0
20.0
25.0
30.0
35.0
40.0
FLOW (cm³/min)
300 L/m².d
2.5 L/m
5 L/m
7.5 L/m
413.7(60.0)
379.2(55.0)
344.8(50.0)
310.3(45.0)
275.8(40.0)
241.3(35.0)
206.8(30.0)
172.4(25.0)
137.9(20.0)
103.4(15.0)
69.0(10.0)
34.5(5.0)
0.0
PRESSURE
kPa (psig)

FIG. 6

THE FILTER AID RECOVERY PROCESS